# EUROPEAN PATENT APPLICATION

(11) **EP 1 653 476 A2**
(43) Date of publication of application: **03.05.2006**
(21) Application number: 05022945.9
(22) Date of filing: 20.10.2005
(51) Int. Cl.: G12B 21/02

(54) **Cantilever**

(30) Priority: 26.10.2004 JP 2004310293
(71) Applicant: Olympus Corporation, Tokyo 151-0072 (JP)
(72) Inventor: Kitazawa, Masashi, 2-3 Kuboyama-cho Hachioji-shi Tokyo (JP); Yoneyama, Junpei, 2-3 Kuboyama-cho Hachioji-shi Tokyo (JP)
(74) Representative: Winter, Brandl, Fürniss, Hübner Röss, Kaiser, Polte Partnerschaft Patent- und Rechtsanwaltskanzlei

(57) **Abstract**

A cantilever having a support portion, a lever portion extended from the support portion, and a probe portion formed in the vicinity of a free end of the lever portion, in which a carbon nano-tube controlled in direction is attached to the probe portion in a manner jutting out from a terminal end portion of the probe portion.

## Description

### Background of the Invention

The present invention relates to cantilevers for use for example in Atomic Force Microscope (AFM), and more particularly relates to a cantilever having a probe portion to which a carbon nano-tube (CNT) is attached.

For AFM in recent years, there is a demand for low abrasion cantilevers with which high-resolution measurements using a pointed probe portion having a small radius of curvature are possible for example without image degradation in continuous measurements of many frames. Cantilevers having carbon nano-tube (hereinafter referred to as CNT) such as one disclosed in Japanese Patent Publication No.3441397 have been proposed to meet such demand. Shown in Fig.1 is a general view of the cantilever disclosed in the publication.

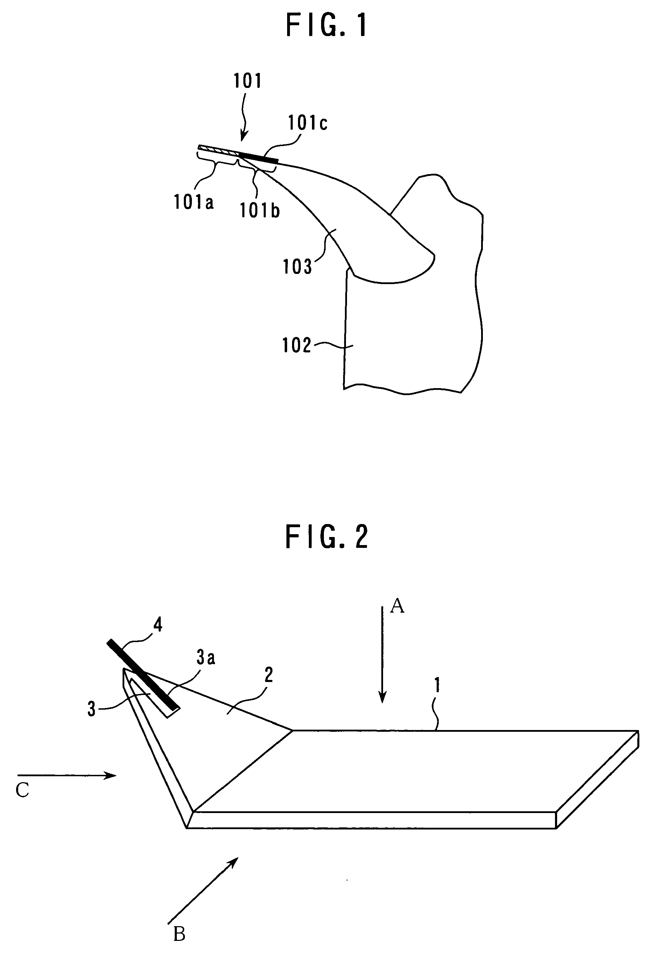

As shown in Fig.1, the cantilever has a CNT 101 attached to a terminal end portion of probe portion 103 which is formed on a lever 102. Here a terminal end portion 101a of CNT 101 is formed as a nano-tube probe, and a base end portion 101b of the body of CNT 101 becomes a fused attaching portion 101c so as to be firmly fixed to the terminal end portion of the probe portion 103. In attaching CNT 101 thereto, a manipulation method is used at the inside of a scanning electron microscope (SEM) on a commercial cantilever formed of silicon.

In accordance with thus constructed cantilever, a multiwall type CNT having a length less than 1 *µ* m with a radius of curvature of the order of 10 to 30nm can be formed on a terminal end portion of the silicon probe portion in a manner jutting out therefrom so as to achieve a cantilever having high aspect ratio. It is thereby possible to faithfully scan and measure a sample to be measured which for example contains deep and narrow grooves.

Since the attaching of CNT as described above makes high-resolution measurements possible even with a silicon-made cantilever having relatively short probe length or a cantilever having an inferior radius of curvature at its probe's terminal end portion, it is possible to use a base material for the cantilever without putting too much emphasis on quality. Further CNT is known to be a hard and elastic material, and CNT can be used as the probe to obtain a high-resolution image that is equivalent to one initially obtained image even after the scanning of several tens of frames of the sample to be measured.

The previously proposed cantilever having a CNT-attached probe portion however has the following problems. First, since CNT is firmly fixed to a terminal end portion of the probe portion by means of fusion with using a base end portion of CNT as a portion to be fused/bonded when it is attached to the probe portion of the cantilever, a stable attaching might be difficult depending on a surface configuration of the terminal end portion of the probe portion corresponding to the fused/bonded portion. Further, a partial adhesion alone between a surface of the probe portion and a base end portion of CNT may cause a coming-off of CNT from the adhered portion, where high reliability and durability cannot be attained. Furthermore, since an accurate orientation of CNT is difficult to be achieved when it is attached to a terminal end portion of the probe portion, fabrication of a reproducible cantilever is also difficult. Moreover, there is a possibility that high resolution measurements are impossible due to the fact that the terminal end portion of CNT may fail to perpendicularly face a sample surface to be measured depending on the attaching direction of CNT.

### Summary of the Invention

To solve the above described problems in the previously proposed cantilever having a CNT-attached probe portion, it is an object of the present invention to provide a cantilever having a CNT-attached probe portion which can be readily manufactured with an excellent reproducibility and which is provided with high resolution, reliability and durability.

In a first aspect of the invention, there is provided a cantilever having a support portion, a lever portion extended from the support portion, and a probe portion formed in the vicinity of a free end of the lever portion, in which a CNT controlled in direction is attached to the probe portion so as to jut out from a terminal end portion of the probe portion.

In accordance with such construction, it is possible to achieve a cantilever having a probe portion to which a CNT having high aspect ratio and possessing a directionality is attached, whereby high-resolution measurements and excellent durability are possible.

In a second aspect of the invention, the CNT in the cantilever according to the first aspect is attached to a groove portion formed on the probe portion so as to be controlled in direction.

In a third aspect of the invention, the CNT in the cantilever according to the first aspect is attached to a pillar-shaped portion formed on the probe portion so as to be controlled in direction.

In accordance with the construction as described, a CNT-attached probe portion having stable directionality can be fabricated easily and with an excellent reproducibility, and bonding strength of CNT thereof is improved so that it is possible to maintain high-resolution measurements for a relatively long time and to improve durability and reliability.

In a fourth aspect of the invention, the probe portion in the cantilever according to any one of the first to third aspects is made of silicon.

By thus forming the probe portion from silicon, higher rigidity and longer probe length can be provided so as to reduce the effect of damping at the time of measurements.

In a fifth aspect of the invention, the probe portion in the cantilever according to any one of the first to third aspects is made of silicon nitride.

By thus forming the probe portion from silicon nitride, it can be formed on a terminal end of the lever portion having a relatively small spring constant, and at the same time a weight of the probe portion is reduced to prevent drop in resonance frequency.

### Brief Description of the Drawings

Fig.1 shows a main portion of construction of a previously proposed example of CNT-attached cantilever.
Fig.2 is a perspective view showing a cantilever according to a first embodiment of the invention.
Figs.3A, 3B, and 3C show the manners as seen from three directions, respectively, of the cantilever according to the first embodiment shown in Fig.2.
Figs.4A to 4I are process drawings for explaining manufacturing method of the cantilever according to the first embodiment shown in Fig.2.
Fig.5 is a perspective view showing a modification of the cantilever according to the first embodiment shown in Fig.2.
Fig.6 is a perspective view showing another modification of the cantilever according to the first embodiment shown in Fig.2.
Figs.7A and 7B each are perspective views showing yet another modification of the cantilever according to the first embodiment shown in Fig.2.
Fig.8 is a perspective view showing a cantilever according to a second embodiment of the invention.
Figs.9A to 9C show the manners as seen from three directions, respectively, of the cantilever according to the second embodiment shown in Fig.8.
Figs.10A to 10I are process drawings for explaining manufacturing method of the cantilever according to the second embodiment shown in Fig.8.
Figs.11A to 11D are perspective views showing a modification of the cantilever according to the second embodiment shown in Fig.8.
Fig.12 is a perspective view showing a cantilever according to a third embodiment of the invention.
Figs.13A to 13C show the manners as seen from three directions, respectively, of the cantilever according to the third embodiment shown in Fig.12.
Figs.14A to 14J are process drawings for explaining manufacturing method of the cantilever according to the third embodiment shown in Fig.12.

### Description of the Preferred Embodiments

Some embodiments according to the present invention will be described below with reference to the drawings.

### (Embodiment 1)

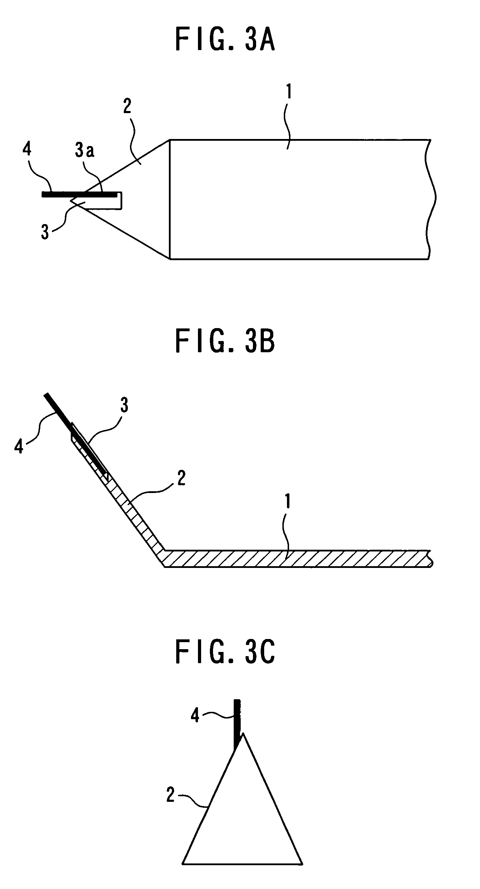

A first embodiment of the invention will now be described. In the first embodiment, a concave groove is formed on a terminal end portion of a probe portion, and a CNT is attached along a side wall of the groove. Fig.2 is a perspective view of the total structure of a lever portion and probe portion of a cantilever according to the first embodiment. Shown in Figs.3A, 3B, and 3C are a top view and a front view as seen from the directions of A and C and a sectional view through center as seen from the direction of B, respectively, of the cantilever according to the first embodiment shown in Fig.2. Referring to Figs.2 and 3A to 3C, numeral 1 denotes a lever portion extended from a support portion (not shown), and 2 denotes a probe portion formed on the free end side of the lever portion 1. The probe portion 2 is formed as a plate-like body and a terminal end portion thereof is formed with a concave groove 3 having an opened terminal end. A base portion of CNT 4 is adhered along a side wall 3a within the groove 3, whereby CNT 4 is attached to the probe portion 2 so that a terminal end portion of CNT 4 juts out from the probe portion 2. Here a carbon deposit in vacuum is used as an adhesive when CNT 4 is bonded into the groove 3 of the probe portion 2.

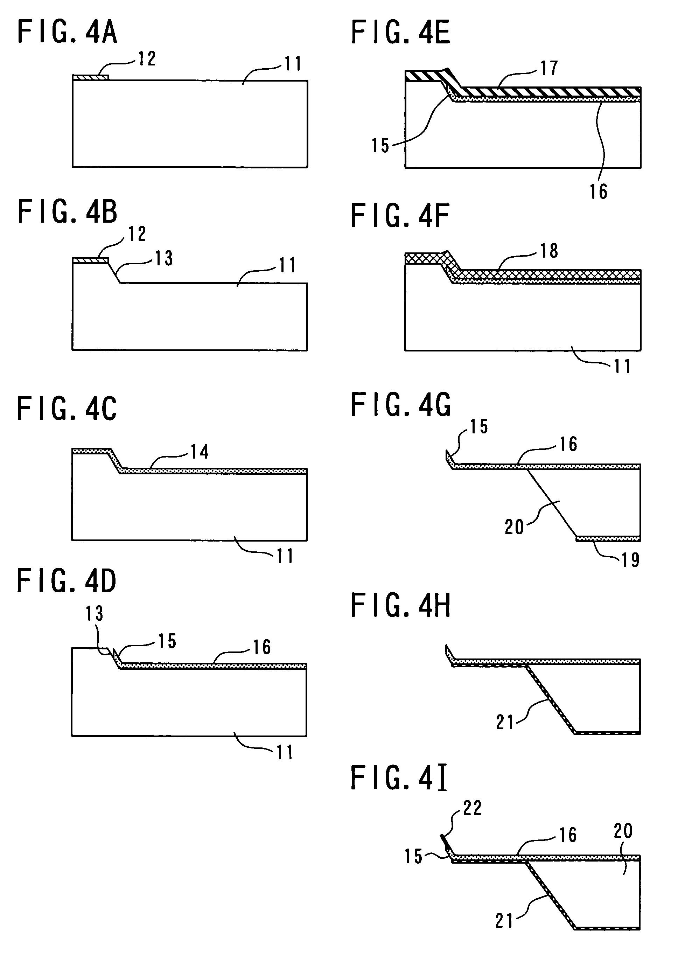

An example of manufacturing process of the cantilever according to the first embodiment will now be described by way of Figs.4A to 4I. First, as shown in Fig.4A, a mask pattern 12 for forming a step portion to shape the probe portion is formed for example with a silicon nitride film or silicon oxide film on a silicon substrate 11 made of silicon wafer of lattice plane (100) having an orientation flat in normal <011> direction.

An anisotropic wet etching is then performed with using an alkaline aqueous solution such as KOH (potassium hydroxide) or TMAH (tetramethyl ammonium hydroxide) to form a step portion 13 as shown in Fig.4B on one plane of the silicon substrate 11.

After removing the mask pattern 12, then, a silicon nitride film 14 serving to become the probe portion and lever portion is deposited as shown in Fig.4C on a surface of the silicon substrate 11 by means of Low Pressure Chemical Vapor Deposition (LP-CVD). For the removing of mask pattern 12, a fluoric acid solution is suitable when a silicon oxide film is used as the mask pattern 12, while such as hot phosphoric acid is suitable when a silicon nitride film is used. The silicon nitride film 14 to become the probe portion and lever portion is a silicon nitride film having a greater silicon content than normal silicon nitride film (Si₃N₄). The silicon nitride film having such composition can be attained by increasing the proportion of dichlorosilane as compared to normal in the flow ratio of dichlorosilane and ammonia at the time of deposition. In this case, a silicon nitride film having a film thickness of 0.1*µ*m is deposited in order to fabricate a cantilever having a resonance frequency of 1 MHz and spring constant of 0.1N/m in mechanical properties.

Next, as shown in Fig.4D, a triangular patterning so as to have a vertical angle of the order of 10° is effected on the sloped surface of the step portion 13 by means of photolithography on the deposited silicon nitride film 14. Subsequently, the silicon nitride film 14 is etched away for example by means of RIE (Reactive Ion Etching) to form a probe portion 15 on the sloped surface of the step portion 13 and a lever portion 16 on a surface of the silicon substrate 11. Here, not only RIE but also other dry etching such as CDE (Chemical Dry Etching) or wet etching such as by hot phosphoric acid can be used as the etching of the silicon nitride film 14.

Next, as shown in Fig.4E, a silicon oxide film 17 is formed all over the surface by means of Atmosphere Pressure Chemical Vapor Deposition (AP-CVD), and a slit-like pattern for forming a concave groove is formed by means of photolithography at a terminal end portion of the probe portion 15. Subsequently, the silicon oxide film 17 is etched away using a wet method or dry method so as to expose only the patterned slit-like portion corresponding to the concave groove at the terminal end portion of the probe portion 16 made of silicon nitride film. Here, the patterning of the silicon oxide film 17 has been performed after forming the silicon oxide film 17 over the probe portion and lever portion made of silicon nitride film. It is however also possible to form a mask for selective oxidation using a hardly oxidizable material for example of a high melting point metal such as W, Ti, Mo, so as to form a slit-like patterning at the probe portion made of silicon nitride film. Subsequently, the resist film for forming the slit-like pattern is removed for example by means of O₂ plasma.

Next, a selective low-temperature thermal oxidation treatment is effected. By such low-temperature thermal oxidation, the slit-like silicon nitride film surface of the probe portion is oxidized at a relatively low rate so that the film thickness of the portion of the slit-like silicon nitride film becomes thinner. Because of this, when the oxide film on the slit-like silicon nitride film is removed, a slit-like concave groove having a depth of several nanometer is formed on the silicon nitride film which constructs the probe portion. It should be noted that depth and width of the concave groove depends on the thermal oxidation temperature and oxidation time. Here a thermal oxidation temperature of 900°C to 1050°C and an oxidation time of 10 minutes or more are preferable. The effect of low-temperature oxidation becomes conspicuous with such setting.

Next, as shown in Fig.4F, a surface protection layer 18 that can sufficiently withstand alkaline etching solution is formed on the silicon nitride film of the probe portion and lever portion having the concave groove formed thereon. At this time, it is also possible to form the surface protection layer 18 with keeping the silicon oxide film 17.

Next, as shown in Fig.4G, a pattern 19 for forming a support portion is formed on the back surface of the silicon substrate 11. Subsequently, an alkaline etching solution for example represented by KOH is used to perform anisotropic etching from the back surface reverse to the side on which the probe portion is formed so as to form a support portion 20 for retaining the lever portion. In the forming of the support portion 20, other dry etching such as ICP-RIE or a process combining dry etching and wet etching also suffices. Thereafter, the pattern 19 is removed, and the surface protection layer 18 over the silicon nitride film constituting the probe portion 15 and lever portion 16 and over the other surfaces of the silicon substrate is removed by means of a fluoric acid solution.

Next, as shown in Fig.4H, a reflection film 21 is formed over a plane of the lever portion 16 on the side opposite to the side on which the probe portion is formed and a surface of the support portion 20. Such as gold, platinum, or aluminum is used as the reflection film 21, and a chromium or titanium material is used as the adhesive layer in the boding portion with the silicon constituting the support portion 20. Up to this processing step, many devices are concurrently fabricated by means of batch fabrication.

Finally, as shown in Fig.4I, CNT 22 is attached to the concave groove formed on the probe portion 15 with its direction being controlled along the side wall of the concave groove of the probe portion so that it is caused to jut out from a terminal end portion of the probe portion 15. In the attaching/fixing portion, a deposit of carbon material is formed in vacuum to adhere CNT 22. It should be noted that, when CNT is to be actually attached, a manipulate method is used at the inside of a scanning electron microscope (SEM). As the above, a cantilever is completed as having CNT of which the direction is controlled toward the apex of the terminal end portion of the probe portion as shown in Fig.2.

In thus constructed cantilever, since CNT having a high aspect ratio with a very small radius of curvature is provided at the terminal end portion of the probe portion, measurements of the interior of a very narrow sample surface become possible and high-resolution measurements also become possible. Further, due to the fact that CNT is attached to the concave groove of the prove portion, the adhered area between CNT and the probe portion is increased so that CNT can be attached in a stable manner. At the same time, the bonding strength with CNT is increased so that high-resolution measurements can be maintained with an excellent reproducibility for a long time duration. Accordingly, durability and reliability of the cantilever can be improved. Furthermore, since CNT is attached along the concave groove of the probe portion that is formed by means of batch fabrication, it becomes possible to attach CNT always in the same direction so that a cantilever with a probe portion having CNT in a stable and highly reproducible manner can be fabricated with ease of control of the directionality of CNT. The attaching of CNT is also facilitated so that work efficiency is improved and lower costs can be achieved. Moreover, since the probe portion formed on the free end of the lever portion made of silicon nitride having a small spring constant is formed of silicon nitride, measurements are possible without damaging the sample to be measured and the weight of the probe portion can be reduced to prevent drop in resonant frequency.

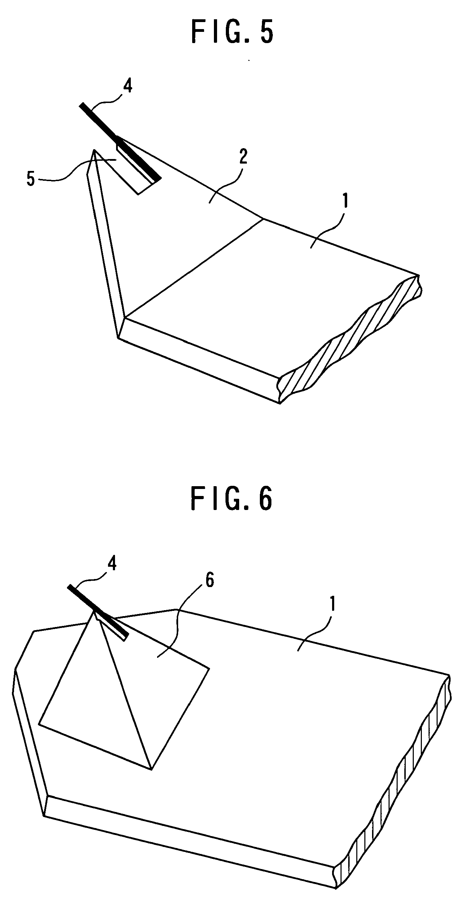

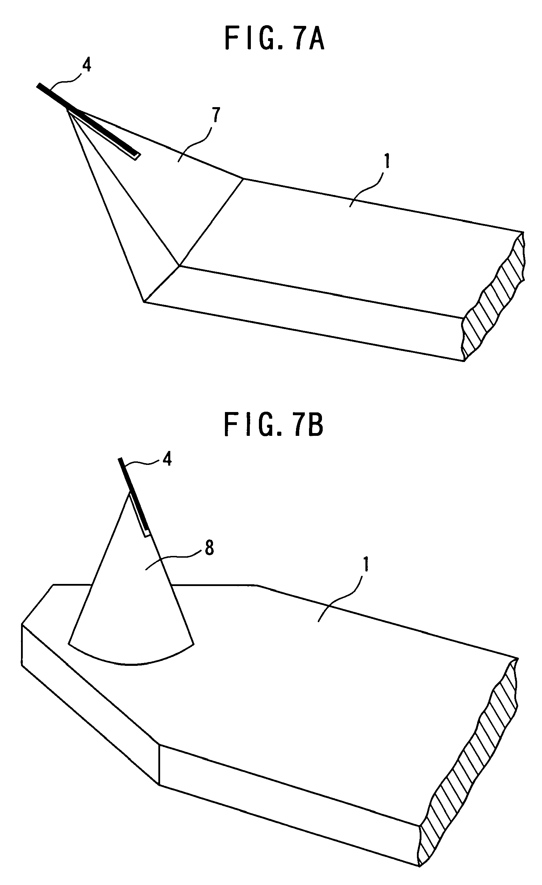

While the present embodiment has been described of the case where a groove width of the concave groove formed on the probe portion is wider than diameter of CNT and CNT is attached along the side wall of the concave groove, it is possible to attach CNT along the groove even when the groove width is narrower. It is also possible to provide a through groove 5 in the manner of a notch at the terminal end portion of the probe portion as shown in Fig.5 based on adjustment of thermal oxidation temperature and oxidation time in the low-temperature thermal oxidation treatment of silicon nitride film at the time of forming the groove, so as to attach CNT 4 along a side wall of the through groove 5. Further, while the present embodiment has been described with respect to a plate-like probe portion, it can naturally also be applied to a pyramidal probe portion 6 and 7 as shown in Figs.6 and 7A and to a conical probe portion 8 as shown in Fig.7B. CNT can be attached to a groove similarly formed on the terminal end portion of each probe portion.

Furthermore, while the present embodiment has been described of the case where the probe portion is formed of silicon nitride, it can also be formed of silicon. In such case, a higher rigidity is obtained as compared to the case of forming the probe portion with silicon nitride, and it thus becomes possible to provide a relatively longer probe length so as to reduce the effect of damping at the time of measurements.

### (Embodiment 2)

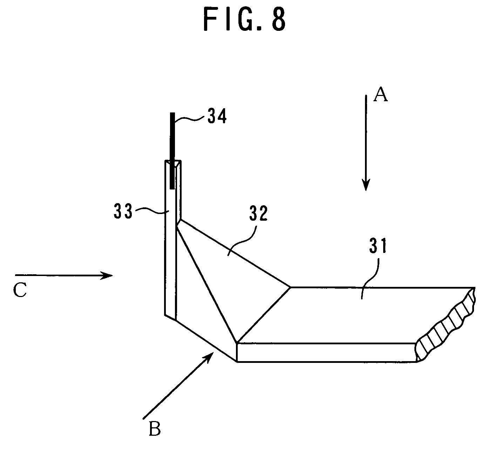

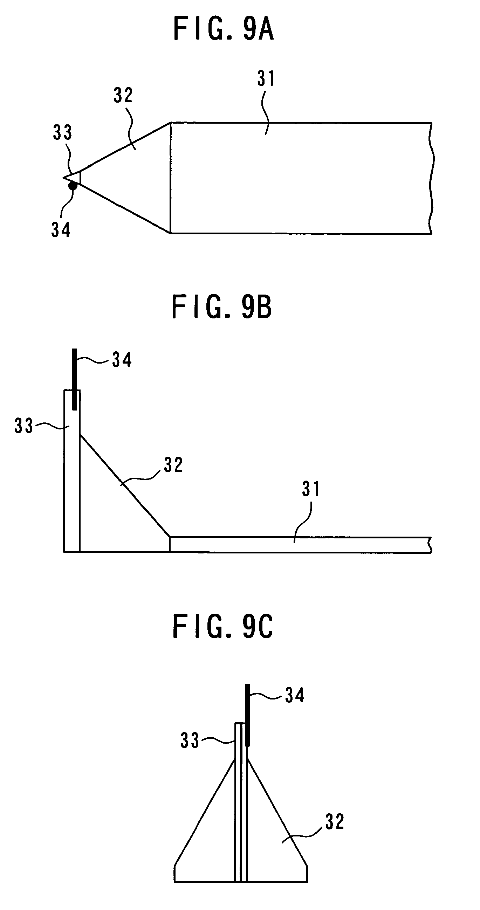

A second embodiment of the invention will now be described. In a cantilever according to the present embodiment, a pillar-shaped portion is formed at a terminal end portion of silicon probe portion in a manner jutting out therefrom, and CNT is attached along a side surface of the pillar portion. Fig.8 is a perspective view of an overall structure of a lever portion and probe portion of the cantilever according to the present embodiment. Shown in Figs.9A to 9C are a top view, side view, and front view as seen from the directions of A, B, and C of the cantilever shown in Fig.8. Referring to these figures, numeral 31 denotes a lever portion extended from a support portion (not shown), and 32 denotes a probe portion formed on the free end side of the lever portion 31. A pillar-shaped portion 33 formed integrally with the probe portion 32 and in a manner jutting out therefrom is provided at a terminal end portion of the probe portion 32, and CNT 34 is adhered and attached in a manner controlled in direction along a side surface of a terminal end portion of the pillar-shaped portion 33 by means of a carbon adhesive. In other words, the pillar-shaped portion 33 serves to function as a guide for attaching CNT 34 so that it is controlled in direction.

Here, the jutted-out pillar-shaped portion 33 is formed so as to be perpendicular to the plane of the lever portion 31.

In thus constructed cantilever, since CNT can be attached perpendicularly with respect to the plane of the lever portion, the CNT serving to become the apex of the probe portion having a high aspect ratio can be brought substantially perpendicularly to the sample to be measured. Measurements at even higher resolution thereby become possible. Further, the pillar-shaped portion 33 is formed in a manner jutting out from the terminal end portion of the probe portion so that the probe portion itself has a high aspect ratio, and in addition CNT is attached to the apex of the pillar-shaped portion 33. For this reason, a sample surface having steep irregularity can be faithfully measured without attaching a long piece of CNT. Also, CNT is not likely to be adsorbed for example by an electrostatic attraction acting between CNT and the sample.

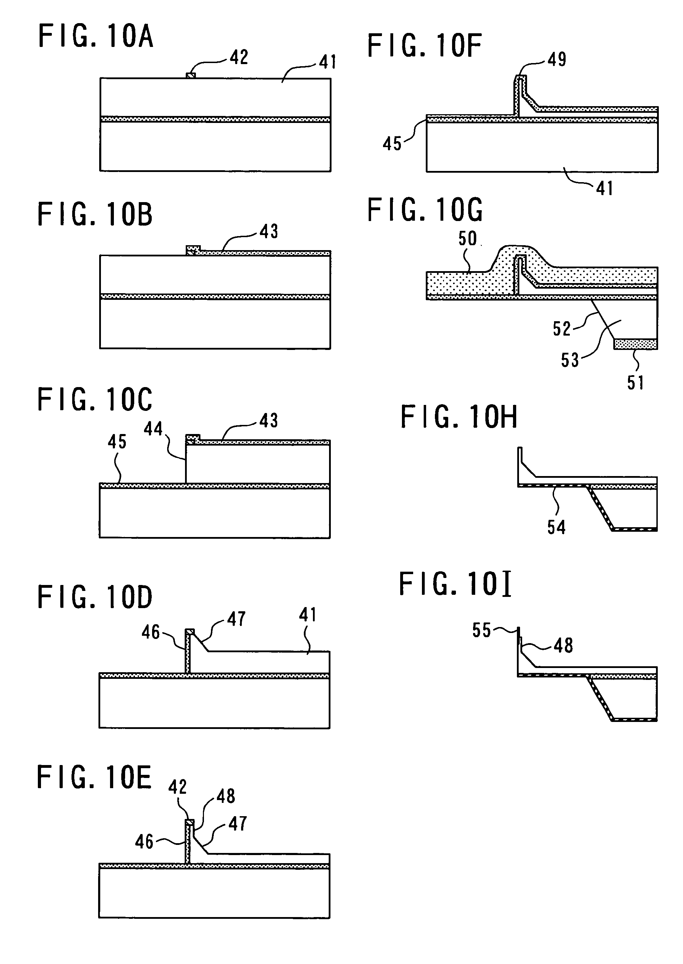

An example of manufacturing process of the cantilever according to the present embodiment will now be described by way of Figs.10A to 10I. First, as shown in Fig. 10A, a silicon oxide mask 42 for determining the configuration of the pillar-shaped portion to be formed integrally with and in a manner jutting out from the probe portion is formed on SOI (Silicon On Insulator) substrate 41 having a silicon layer of lattice plane (100) having an orientation flat in normal <011> direction. Here, the cross-sectional configuration of the pillar portion to be jutted out is preferably a polygon.

Next, as shown in Fig.10B, a silicon nitride film 43 is formed on SOI substrate 41 in the region to become the probe portion and lever portion. At this time, the silicon nitride film 43 is formed with effecting a patterning so that one end of the silicon nitride film 43 coincides one end of the pillar-shaped portion forming mask 42.

Next, as shown in Fig.10C, a vertical etching is effected to a depth of 10 to 30*µ*m on the silicon layer of S0I substrate 41 with using the silicon nitride film 43 as a mask so as to reach a middle oxide film 45 within the SOI substrate 41 so that a silicon vertical plane 44 is formed. The vertical etching of the silicon layer is effected for example using an ICP-RIE system.

Next, as shown in Fig.10D, a silicon oxide film 46 for use as an etching protection film is formed on the silicon vertical plane 44, and then the silicon nitride film 43 is removed for example by RIE to bring a silicon plane of the SOI substrate 41 to the surface. Subsequently, the silicon layer of SOI substrate 41 is etched by means of dipping into an alkali solution such as TMAH or KOH to form a sloped plane 47 of lattice plane (111).

Next, as shown in Fig.10E, the pillar forming mask 42 is used to perform a vertical etching of the silicon layer on which the sloped plane 47 has been formed. Here, ICP-RIE etching is performed to etch the silicon layer away until a predetermined thickness of the lever portion is attained. At this time, a silicon pillar-shaped portion 48 is formed in a jutting out manner at the portion under the mask 42.

Next, as shown in Fig.10F, the mask 42 and protection silicon oxide film 46 are removed, and then an oxidation treatment all over the surface is performed to form a silicon oxide film 49. Here, a low-temperature thermal oxidation treatment for 500 minutes at 950°C is desirable. It is thereby possible to additionally sharpen the cross-sectional configuration of the pillar-shaped portion 48. At this time, the surface of the middle oxide film 45 of SOI substrate 41 is also oxidized to some extent. It should be noted that, in this low-temperature thermal oxidation treatment, it is also possible to keep the vertical silicon oxide film 46 as it is.

Next, after etching the silicon layer into the shape of the lever portion with using a mask for lever portion, the surface on the probe portion side is protected for example by a silicon oxide film 50 as shown in Fig.10G, and a mask 51 for the support portion is formed on the SOI substrate surface on the side reverse to the probe portion. Subsequently, the silicon substrate 41 is etched as it is dipped into an alkali solution such as TMAH or KOH to form a silicon support portion 53 having a sloped plane 52 of lattice plane (111). In forming the support portion 53, it is also possible to use a process based on other dry etching such as ICP-RIE or a process based on a combination of dry etching and wet etching.

Next, as shown in Fig.10H, the protection silicon oxide films 49, 50 on the probe portion side and the support portion forming mask 51 are etched away with using a solution such as fluoric acid, and a reflection film 54 is formed by means of vapor deposition all over the side reverse to the side on which the probe portion is formed. Such as gold, platinum, or aluminum is used as the reflection film 54, and an adhesive layer of chromium or titanium material is used at the boding portion with the silicon.

Finally, as shown in Fig.10I, CNT 55 is attached along the pillar-shaped portion 48 so as to jut out from the pillar-shaped portion 48. The attaching/fixing portion between CNT 55 and the pillar-shaped portion 48 is bonded by using a carbon system material. It should be noted that, when CNT 55 is to be actually attached, a manipulate method is used in the attaching at the inside of a scanning electron microscope (SEM). As the above, a cantilever having CNT attached thereto is completed, where the attached CNT is controlled in direction so as to be perpendicular to the surface of the lever portion as shown in Fig.8.

Since thus constructed cantilever having CNT according to the second embodiment has CNT of a high aspect ratio with a very small radius of curvature provided at the terminal end portion of the probe portion, faithful measurements are possible of a sample surface which is very narrow and has steep irregularity, and high-resolution measurements also become possible. Further, it is not likely to be adsorbed for example by an electrostatic attraction acting between CNT and the sample. Furthermore, since the adhered area between CNT and the probe portion is increased due to the attaching to the pillar-shaped portion which is formed on the probe portion in a manner jutting out therefrom, CNT can be attached in a stable manner, and, since the bonding strength with CNT is increased, high-resolution measurements can be maintained with an excellent reproducibility for a long time duration. Accordingly, durability and reliability of the cantilever can be improved. Moreover, since CNT is attached along the pillar-shaped portion which is formed in a manner vertically jutting out from the surface of the probe portion by means of batch fabrication, it can be attached always in the same direction. Control of directionality of CNT is easy, and the cantilever can be fabricated in a stable manner and with an excellent reproducibility. The attaching of CNT is also facilitated so that work efficiency is improved and lower costs can be achieved.

Further, since the cantilever according to the present embodiment has a silicon probe portion, it can be applied not only to SPM cantilever but also to an electrode probe for evaluating electric characteristics. It can also be used as tweezers for nano-region manipulation. It can also be applied to an injection needle for use into cell.

It should be noted that the present embodiment has been described of an example where CNT is attached to a pillar-shaped portion of probe portion which has the pillar-shaped portion formed as jutting out further from a terminal end portion of the probe portion. A pillar-shaped portion formed as jutting out from the terminal end portion however is not necessarily required. If a pillar-shaped portion serving as an attaching guide of CNT is formed on the probe portion body, it is possible irrespective of its formed location and configuration to attach CNT in a stable manner and with an excellent directionality. Such modifications will now be described.

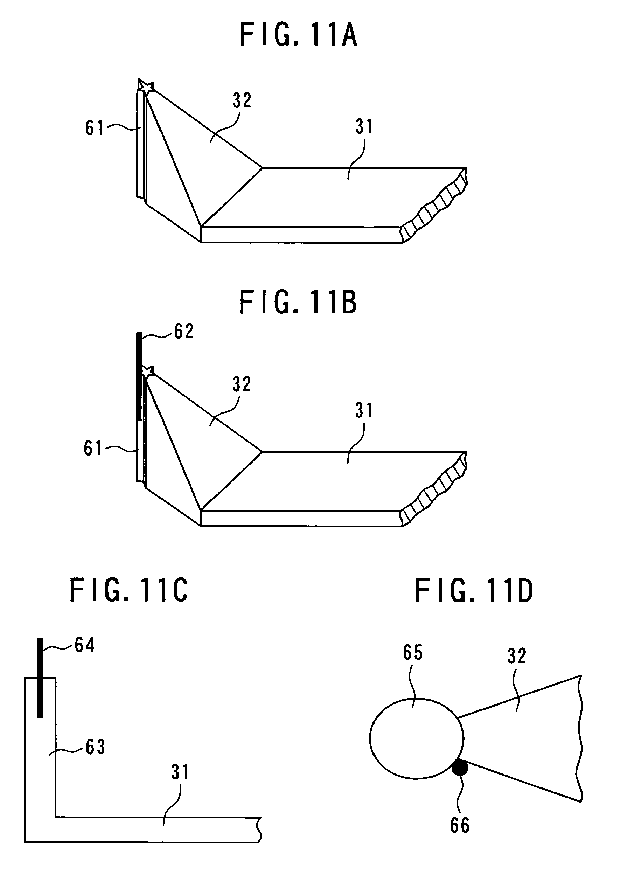

First, if a pillar-shaped portion 61 that is perpendicular to the surface of the lever portion 31 is formed on a side portion of the probe portion 32 as shown in Figs.11A and 11B, it is possible to attach CNT 62 with a directionality along the pillar-shaped portion 61. While one formed into the shape of a star is shown as the pillar-shaped portion 61 in this modification, the attaching of CNT is facilitated if the shape is a polygon.

Further, as shown in Fig.11C, it is also possible that only a pillar-shaped portion 63 that is perpendicular to the lever portion 31 be formed as the probe portion as shown in Fig.11C so as to attach CNT 64 along the pillar-shaped portion 63 in a manner jutting out therefrom. The function as a cantilever can be adequately served.

Furthermore, as shown in Fig.11D as a top view, even when a pillar-shaped portion 65 to be formed along a vertical side portion of the probe portion 32 has a substantially circular cross section such as a circle or oval, a concave portion that is perpendicular to the surface of the lever portion 31 is formed at a boundary portion between the pillar-shaped portion 65 and the probe portion 32 if the cross sectional dimensions of the pillar-shaped portion 65 at the boundary portion are greater than the cross-sectional dimensions of the vertical side portion of the probe portion 32. For this reason, CNT 66 can be attached in a manner being held in and fixed to the concave portion. Naturally in this case, the configuration of the pillar-shaped portion is not limited and a polygon also suffices.

While the cantilever according to the present embodiment has been described with respect to the probe portion made of silicon, it can also be formed as a composite probe portion of silicon and silicon nitride by covering the entire probe portion with silicon nitride. A pillar-shaped portion can be formed on the composite probe portion to similarly attach CNT to the pillar-shaped portion. Further, if silicon is removed after covering the entire probe portion with silicon nitride, it can also be used as a probe portion made of silicon nitride. A pillar-shaped portion can be formed on the silicon nitride probe portion of this manner to similarly attach CNT.

### (Embodiment 3)

A third embodiment of the invention will now be described. In the construction of a cantilever of the present embodiment, a pillar-shaped protrusion is formed on a probe portion made of silicon nitride, and CNT is attached to the pillar-shaped protrusion. In the present embodiment, the pillar-like protrusion is formed on a terminal end portion of the silicon nitride probe portion so that there is an advantage that CNT controlled in direction can be attached thereto so as to be perpendicular to the surface of the lever portion.

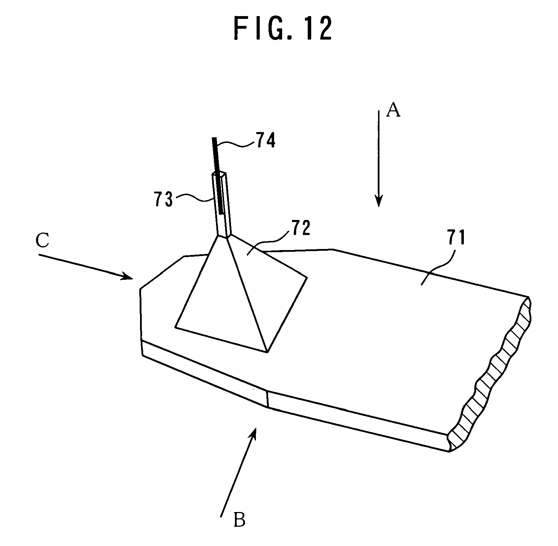

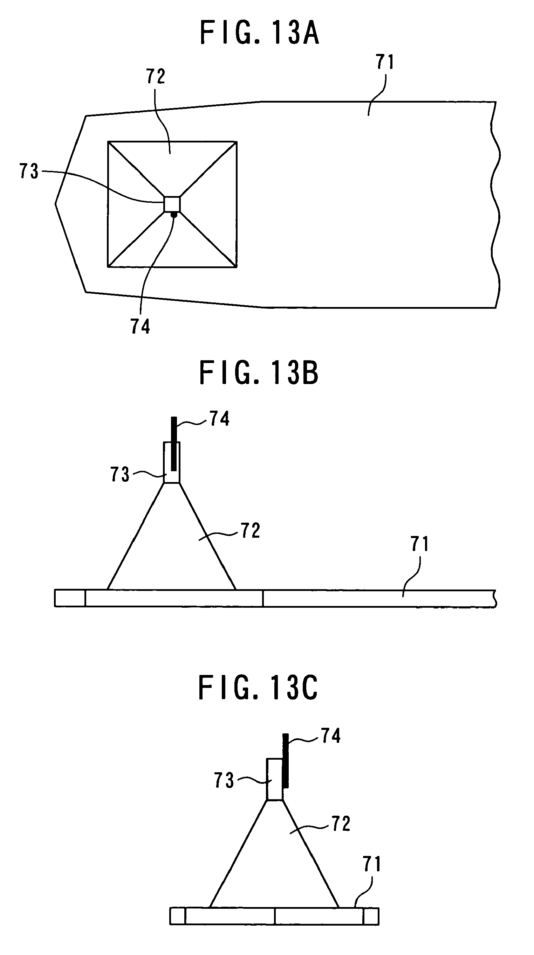

Fig.12 is a perspective view of an overall structure of a lever portion and probe portion of the cantilever according to the present embodiment. Shown in Figs.13A to 13C are a top view, side view, and front view as seen from the directions of A, B, and C in Fig.12. Referring to these figures, numeral 71 denotes a lever portion extended from a support portion (not shown), and 72 denotes a probe portion formed on the free end side of the lever portion 71. The probe portion 72 is in the form of a quadrangular pyramid made of silicon nitride, and has a pillar-shaped protrusion 73 formed on a terminal end portion thereof. CNT 74 is then adhered to a side plane of the pillar-shaped protrusion 73 by means of a carbon system adhesive so as be attached thereto in a manner jutting out from the pillar-shaped protrusion 73. Here the pillar-shaped protrusion 73 is oriented so as to be perpendicular to the surface of the lever portion 71.

In thus constructed cantilever, since CNT 74 can be attached along a direction perpendicular to the surface of the lever portion 71, it is possible to cause a tip of the probe portion having high aspect ratio to substantially vertically face the sample to be measured. Measurements at even higher resolution become possible. Furthermore, since the probe body on which the pillar-shaped protrusion 73 is provided has a high aspect ratio and CNT is attached further to the tip thereof, a sample having steep surface irregularities can be faithfully measured without attaching CNT having greater length. Also, adsorption such as due to electrostatic attraction acting between CNT and the sample is not likely.

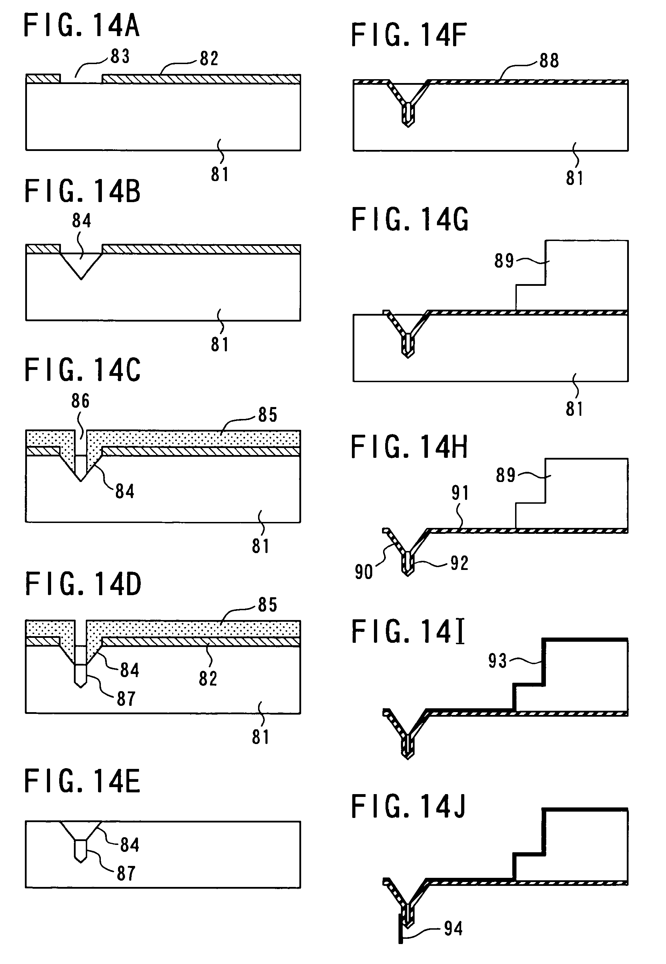

An example of manufacturing process of the cantilever according to the present embodiment will now be described by way of Figs.14A to 14J. First, as shown in Fig.14A, a silicon nitride film 82 to become a mask for forming a probe portion is formed using LP-CVD method on a silicon substrate 81 with lattice plane (100) having an orientation flat in normal <011> direction. Subsequently, the probe portion forming mask is used to remove the silicon nitride film 82 at a probe portion forming portion 83 for example with using RIE.

Next, as shown in Fig.14B, the silicon substrate 81 is etched by an alkali solution such as KOH or TMAH. Since the probe portion forming mask is generally in the form of a square, a quadrangular pyramid-like concave portion 84 surrounded by lattice planes (111) is formed in the silicon substrate 81 of the probe portion forming portion after the etching.

Next, as shown in Fig.14C, a patterning is performed by resist mask 85 so as to form an opening 86 only at a center portion of the probe portion forming concave portion 84.

Next, as shown in Fig.14D, ICP-RIE etching for example is used to etch the silicon substrate 81 so as to form a pillar-shaped concave portion 87 to a depth of several microns at a center portion of the probe portion forming concave portion 84.

Next, as shown in Fig.14E, the resist mask 85 for ICP-RIE is removed by means of O₂ plasma treatment and sulfuric acid, and then the probe portion forming mask (silicon nitride film) 82 is removed for example using hot phosphoric acid.

Next, as shown in Fig.14F, a silicon nitride film 88 to become the material for forming the probe portion and lever portion is formed all over the surface with using LP-CVD method. Here, since the film thickness of the silicon nitride film 88 greatly affects the spring constant of the cantilever, the silicon nitride film 88 is formed with previously determining its film thickness in order to obtain a desired spring constant. Subsequently, the silicon nitride film 88 is patterned into the configuration of a lever and of a portion for attaching a support portion, and an etching for example by means of RIE is effected.

Next, as shown in Fig.14G, a support portion 89 for supporting the cantilever is formed. Here such as glass is used as the support portion 89 and is bonded by means of anode bonding to the silicon substrate 81 through the silicon nitride film 88.

Next, as shown in Fig.14H, the entire portion of the silicon substrate 81 is etched away by means of dipping into an alkali solution such as TMAH or KOH to form a cantilever having a probe portion 90 and lever portion 91 and supported by the support portion 89. At this time, a pillar-shaped protrusion 92 is formed at the terminal end portion of the probe portion 90.

Next, as shown in Fig.14I, a reflection film 93 is formed by means of vapor deposition all over the surface on the side reverse to the side on which the probe portion 90 is formed. Such as gold, platinum, or aluminum is used as the reflection film 93, and an adhesive layer of chromium or titanium material is used at the bonding portion with the silicon nitride film for forming the probe portion 90 and lever portion 91 and with the support portion 89.

Finally, as shown in Fig.14J, CNT 94 is attached along the pillar-shaped protrusion 92 of the probe portion 90, and the fixing portion between CNT 94 and the pillar-shaped protrusion 92 is bonded with a carbon system material. It should be noted that, when CNT is to be actually attached, a manipulate method is used at the inside of a scanning electron microscope (SEM). As the above, a cantilever having CNT attached thereto is completed, where the attached CNT is controlled in direction so as to be perpendicular for the surface of the lever portion as shown in Fig.12.

Since thus constructed cantilever according to the third embodiment has CNT of a high aspect ratio with a very small radius of curvature at the terminal end portion of the probe portion so that it be perpendicular to the surface of the lever portion, faithful measurements are possible of the interior of a sample surface which is very narrow and has steep irregularity, and high-resolution measurements also become possible. Further, it is not likely to be adsorbed by electrostatic attraction acting between CNT and the sample. Furthermore, since the adhered area between CNT and the probe portion is increased due to the attaching to the pillar-shaped protrusion of the probe portion, CNT can be attached to the probe portion in a stable manner, and, since the bonding strength with CNT is increased, high-resolution measurements can be maintained with an excellent reproducibility for a long time duration. Accordingly, durability and reliability of the cantilever can be improved. Moreover, since CNT is attached along the pillar-shaped protrusion that is formed by batch fabrication in a manner perpendicular to the surface of the lever portion, it can be attached always in the same direction. Thus control of directionality of CNT is easy, and the cantilever can be fabricated in a stable manner and with an excellent reproducibility. The attaching of CNT is also facilitated so that work efficiency is improved and lower costs can be achieved.

Further, since the lever portion and probe portion of the cantilever according to the present embodiment are made of silicon nitride, a cantilever having a relatively thin lever thickness and small spring constant is obtained so that a biological soft sample can be measured at high resolution without damaging it. It should be noted that, while the present embodiment has been described of the construction where CNT is provided on a pillar-shaped protrusion of a pyramidal probe portion made of silicon nitride, it is naturally also possible with a conical probe portion made of silicon to form a pillar-shaped protrusion on a terminal end portion of the probe portion so as to attach CNT to the pillar-shaped protrusion.

In the above described first to third embodiments, since CNT is attached to the probe portion, the terminal end portion of the probe portion before the attaching of CNT needs not be sharpened. That is, such as a probe-like protrusion on the lever portion suffices. Accordingly, since a sharpening of the probe portion body is not required, a reduction in costs can be achieved.

According to the present invention as has been described by way of the above embodiments, CNT having high aspect ratio can be formed at a probe terminal end in a stable manner and with an excellent reproducibility while its direction is controlled so that high resolution measurements are possible. Further the bonding strength with CNT is improved, and high resolution measurements can be maintained for a relatively long time so that durability and reliability are improved. By forming the pillar-shaped portion by means of batch fabrication, a probe portion with CNT having high aspect ratio can be fabricated at a cost equivalent to the conventional cantilever. Further, when CNT is to be attached, the attaching is easy and a reduction in work time can be expected, since a groove serving as guide is formed.

## Claims

1. A cantilever comprising a support portion, a lever portion (1, 31, 71) extended from the support portion, and a probe portion (2, 32, 72) formed in the vicinity of a free end of the lever portion, wherein a carbon nano-tube (4, 34, 74) controlled in direction is attached to said probe portion in a manner jutting out from a terminal end portion of the probe portion.

2. The cantilever according to claim 1, wherein said carbon nano-tube is attached to a groove portion (3, 5) formed on said probe portion so as to be controlled in direction.

3. The cantilever according to claim 1, wherein said carbon nano-tube is attached to a pillar-shaped portion (33, 61, 63, 73) formed on said probe portion so as to be controlled in direction.

4. The cantilever according to any one of claims 1 to 3, wherein said probe portion is made of a silicon.

5. The cantilever according to any one of claims 1 to 3, wherein said probe portion is made of a silicon nitride.
